# EUROPÄISCHE PATENTSCHRIFT

(11) **EP 3 823 780 B1**
(45) Veröffentlichungstag und Bekanntmachung des Hinweises auf die Patenterteilung: **20.04.2022**
(21) Anmeldenummer: 19735224.8
(22) Anmeldetag: 18.06.2019
(51) Int. Cl.: B22F 3/11, B22F 7/00, B22F 7/02, C22C 1/04

(54) **VERFAHREN ZUR HERSTELLUNG EINES OFFENPORIGEN METALLKÖRPERS MIT EINER OXIDSCHICHT UND EIN MIT DEM VERFAHREN HERGESTELLTER METALLKÖRPER**
METHOD FOR PRODUCING AN OPEN-PORED METAL BODY HAVING AN OXIDE LAYER AND METAL BODY PRODUCED BY SAID METHOD
PROCÉDÉ DE FABRICATION D'UN CORPS MÉTALLIQUE À PORES OUVERTS, COMPRENANT UNE COUCHE D'OXYDE, ET CORPS MÉTALLIQUE FABRIQUÉ AVEC LE PROCÉDÉ

(30) Priorität: 20.07.2018 DE 102018212110
(43) Veröffentlichungstag der Anmeldung: 26.05.2021
(60) Teilanmeldung: 22160770.8
(73) Patentinhaber: Alantum Europe GmbH, 81541 München (DE); Fraunhofer-Gesellschaft zur Förderung der angewandten Forschung e.V., 80686 München (DE)
(72) Erfinder: WALTHER, Gunnar, 01277 Dresden (DE); BÜTTNER, Tilo, 01277 Dresden (DE); BÖHM, Hans-Dietrich, 01277 Dresden (DE); KIEBACK, Bernd, 01277 Dresden (DE); WEISSGÄRBER, Thomas, 01277 Dresden (DE); BODEN, Arne, 01277 Dresden (DE); POSS, René, 63450 Hanau (DE); ANDREAS, Tillmann, 82008 Unterhaching (DE); KOLVENBACH, Robin, 80639 München (DE); TORKUHL, Lars, 80809 München (DE); GERSTLE, Alexandra, 80807 München (DE)
(74) Vertreter: Pfenning, Meinig & Partner mbB
(86) Internationale Anmeldenummer: PCT/EP2019/065975
(87) Internationale Veröffentlichungsnummer: WO 2020/015944

(56) Entgegenhaltungen:
- US-A1- 2007 160 518
- US-B2- 8 012 598

## Beschreibung

Die vorliegende Erfindung betrifft ein Verfahren zur Herstellung eines offenporigen Mettallkörpers, bevorzugt einen offenporigen Metallschaumkörper mit einer Oxidschicht, insbesondere ein strukturiertes Trägermaterial basierend auf einem offenporigen Metallhalbzeug sowie einen mit dem Verfahren hergestellten Metallkörper. Offenporige Körper, insbesondere Körper, die mit einem Metallschaum gebildet sind, sind an sich bekannt. Reine aus einem Element oder einer Legierung bestehende Metallkörper, d.h. z.B. Metallschaumstege ohne äußere Schutzhülle, weisen dabei Defizite auf, wie beispielsweise eine geringe mechanische Belastbarkeit duktiler Metalle, niedrige thermische Stabilität, mangelnde Korrosionsbeständigkeit und die unerwünschte Migration von Elementen aus dem Werkstoff eines offenporigen Körpers in eine darauf ausgebildete funktionale Beschichtung. Die unerwünschte Migration von Elementen aus dem metallischen Werkstoff in eine darauf ausgebildete aktive, funktionale Beschichtung vermag deren Kristallstruktur, chemische Zusammensetzung und bevorzugte Oxidationsstufen von Elementen zu verändern und folglich deren Funktion als Wärmeleiter, elektrischer Leiter oder Katalysator chemischer Reaktionen zu beeinträchtigen. Insbesondere bei katalytisch wirkenden funktionalen Beschichtungen kann dies zur so genannten Vergiftung einer katalytisch wirksamen Komponente führen, was zur Verschlechterung der Selektivität zugunsten unerwünschter Nebenreaktionen sowie zu beschleunigter Alterung und Verlust der katalytischen Aktivität eines Katalysators führen kann.

So ist aus US 2007/0160518 A1 ein Metallschaum für den Einsatz in Abgasanlagen bekannt.

US 2014/0221700 A1 betrifft einen an der Oberfläche modifizierten Oberfläche.

Ein Katalysator mit Aluminiumoxidschicht ist in US 2012/0302811 A1 offenbart.

In DE 38 83 722 T2 ist ein Verfahren zur Herstellung von ferritischem rostfreien Stahl beschrieben.

US 8 012 598 B2 betrifft einen Metallschaumkörper.

Ein Verfahren zur Herstellung einer Metallanordnung geht aus US 2013/0061987 A1 hervor.

Eine metallgetragene Katalysatorstruktur kann man US 2014/0106962 A1 entnehmen.

Aufgabe der vorliegenden Erfindung ist es, offenporige Werkstoffe aus Metall- bzw. Metalllegierungen mit chemisch definierten und strukturierten reinen oder gemischtmetallischen Aluminiumoxidoberflächenschichten mit einem hohen Anteil an Aluminiumoxid, sowie ein Verfahren beinhaltend die Beschichtung von Metall- bzw. Metalllegierungsschäumen mit Aluminium oder ein- und/oder mehrphasigen Legierungen bildenden Partikeln aus Aluminium und mindestens einem weiteren Metall M unter Erhalt der offenporigen Struktur, die Bildung stoffschlüssiger Bindungen und intermetallischer Phasen innerhalb der Beschichtung und zwischen Beschichtung und einer einen Kern bildenden Schicht (Kernschicht), insbesondere einer Schaumoberfläche, durch Sintern des beschichteten Halbzeugs oder Schmelzen der Beschichtung und die Bildung einer chemisch definierten, strukturierten Schutzschicht durch einen abschließenden Oxidationsschritt, bereitzustellen.

Erfindungsgemäß wird diese Aufgabe mit einem Verfahren, das die Merkmale des Anspruchs 1 aufweist, gelöst. Anspruch 4 betrifft ein mit dem Verfahren hergestellten Metallkörper. Vorteilhafte Ausgestaltungen und Weiterbildungen der Erfindung können mit in untergeordneten Ansprüchen bezeichneten Merkmalen realisiert werden.

Ein erfindungsgemäß hergestellter offenporiger Metallkörper ist mit einer Kernschicht A bestehend aus Ni, Co, Fe, Cu, Ag oder einer Legierung, die mit einem dieser chemischen Elemente gebildet ist, wobei in der Legierung eines dieser chemischen Elemente mit mehr als 40 at% enthalten ist, gebildet. An Oberflächen der Kernschicht ist eine gradierte Schicht, die mit intermetallischen Phasen oder Mischkristallen von Al gebildet ist.

Auf der gradierten Schicht ist wiederum eine Oxidschicht, die mit Aluminiumoxid gebildet ist, vorhanden. Die Oxidschicht ist aus reiner α-Al₂O₃ Phase gebildet.

Die gradierte Schicht und/oder die Oxidschicht C sollte(n) die Oberfläche der Kernschicht zu mindestens 90 %, bevorzugt vollständig bedecken.

Vorteilhaft sollte die gradierte Schicht B eine Schichtdicke im Bereich 1 µm bis 50 µm und die Oxidschicht C eine Schichtdicke im Bereich 0,05 µm bis 1 µm aufweisen.

Bei der Herstellung soll die Oberfläche eines die Kernschicht bildenden Halbzeugs mit reinem Aluminiumpulver oder einem Pulver einer Aluminiumlegierung, in der Aluminium mit mindestens 40 at% enthalten ist, beschichtet werden.

Bei der vorliegenden Erfindung werden zur Herstellung offenporige Körper aus einem metallischen Werkstoff als Halbzeug eingesetzt. Dabei kann es sich um Schäume, Gitter, Netze, Gewebe, Gewölle, Filze oder Gelege handeln, die ein Fasergebilde aus Metall- oder Metalllegierungen darstellen können. Vorteilhaft werden offenporige Schäume aus Metall- oder Metalllegierungen mit Flächendichten im Bereich von 100 g/m² - 10000 g/m², vorteilhafter im Bereich von 300 g/m² - 3000 g/m² eingesetzt. Geeignete Metalle bzw. Legierungen für die porösen Ausgangsmaterialien werden aus mindestens einem Element der Gruppe Ni, Cu, Co, Fe, Ag gebildet. Ein solches offenporiges Halbzeug kann beispielsweise durch galvanische Beschichtung eines offenporigen Polymerwerkstoffs mit einem dieser Metalle erhalten werden. Die organischen Bestandteile des Polymers können im Rahmen einer Wärmebehandlung durch Pyrolyse entfernt werden. Für die Herstellung von Streckmetallgittern als Halbzeug können Metallbleche mit zueinander versetzten, linienförmigen Stanzschnitten versehen und gedehnt werden. Metallfilze werden ausgehend von Drähten gefertigt, die mittels geriffelter Messer in Fasern unterschiedlicher Stärken geschnitten werden. Metallgewebe und Netze können durch geordnetes Ineinanderfügen von Metalldrähten geeigneter Stärken erhalten werden. Des Weiteren können geeignete offenporige Metallstrukturen als Halbzeug durch additive Fertigungstechnologien wie beispielsweise 3D-Druck, selektives Laserschmelzen, Binder Jetting oder Elektronenstrahlschmelzen erhalten werden.

Das offenporige, metallische Halbzeug wird mit metallischen Partikeln beschichtet, die in Form eines Pulvers, eines Pulvergemischs, einer Suspension oder einer Dispersion vorliegen können. Das metallische Pulver soll reines Aluminiumpulver oder ein Pulver einer Aluminiumlegierung, in der Aluminium mit mindestens 40 at% enthalten ist, sein. Die Beschichtung des Halbzeugs kann durch Tauchen, Sprühen, druckunterstützt, elektrostatisch und/oder magnetisch erfolgen, wobei die offenporige Struktur des Halbzeugs erhalten bleibt. Für die Beschichtung werden Partikel mit einer Größe im Bereich von 0,5 µm - 150 µm, vorteilhafter im Bereich von 5 µm - 100 µm verwendet. Die Metallpartikel bzw. Legierungspartikel enthalten Aluminium oder Aluminium neben anderen Metallen, die infolge einer Temperaturbehandlung eine ein- und/oder mehrphasige Legierung mit Aluminium bilden können. Die für die Beschichtung eingesetzten Partikel enthalten Aluminium mit einem Gehalt von 40 at% - 100 at% und können ferner mindestens ein anderes mit Aluminium eine ein- und/oder mehrphasige Legierung bildendes Element mit einem Gehalt von 0 at% - 60 at% umfassen. Dabei kann es sich vorteilhafterweise um mindestens eines der Elemente Ni, Cu, Co, Mo, Fe, Ag, Mg, Si, Ti, W handeln. In einer vorteilhaften erfindungsgemäßen Ausführungsform kann für die Beschichtung des offenporigen Halbzeugs mit Partikeln ein Binder auf die Oberfläche des Halbzeugs aufgetragen werden, um die Haftung der Partikel an die Oberfläche zu verbessern. Der Binder kann in flüssiger Phase gelöst, dispergiert, suspendiert oder als Pulver vor oder während der Beschichtung des Halbzeugs aufgetragen werden. Durch Einwirkung mechanischer Energie, insbesondere einer Vibration kann die Verteilung von Partikeln innerhalb einer den Binder enthaltenden flüssigen Phase sowie deren Haftung an Oberflächen des Halbzeugs verbessert werden.

Der Auftrag von Partikeln als Pulver, Pulvergemisch und/oder Suspension/Dispersion kann mehrfach wiederholt werden, um eine höhere, gewünschte Dicke der Beschichtung zu erhalten. Dies betrifft auch die jeweils durchzuführende Vibration und ggf. die Applikation eines Binders. Beim Auftrag sollte jedoch beachtet sein, dass die offenporige Struktur erhalten bleibt, zumindest jedoch nach einer Wärmebehandlung, mit der die Oxidschicht C ausgebildet wird, der Metallkörper offenporig ist.

Im Zuge einer thermischen Behandlung können organische Bestandteile des beschichteten Halbzeugs durch Pyrolyse, Verdampfung und/oder Desorption entfernt werden. Bei den organischen Bestandteilen kann es sich um einen organischen Binder, ein organisches Lösungsmittel, organische Bestandteile eines Polymers oder aus der Umgebung adsorbierte organische Verbindungen handeln. Die thermische Behandlung kann im Temperaturbereich von 400 °C-600 °C unter inerter Atmosphäre und/oder reduziertem Druck durchgeführt werden.

Im Rahmen der anschließenden ersten thermischen Behandlung kann das beschichtete Halbzeug bevorzugt mit einer Heizrate von 1 K/min- 20 K/min auf eine Temperatur im Bereich von 400 °C - 1000 °C, vorteilhaft bei 450 °C bis 700 °C, unter inerter Atmosphäre und/oder reduziertem Druck bei einer Haltezeit von 0,1 s - 30 min, vorteilhaft bei 1 s - 10 min, erwärmt werden. Dabei werden die aufgetragenen Aluminium- oder aluminiumhaltigen Partikel des Metallpulvers und die Oberfläche der Struktur des offenporigen Halbzeugs über Sinterhälse und Brücken stoffschlüssig miteinander verbunden und aluminiumreiche, intermetallische Phasen bzw. Mischkristalle aus den in den Partikeln enthaltenen Elementen an oder mit der Oberfläche des offenporigen metallischen Halbzeugs gebildet. Bei Verwendung reinen Aluminiumpulvers erfolgt eine kurzzeitige Erwärmung unter Bildung einer flüssigen Phase, so dass Aluminium in flüssiger Phase ausschließlich an der Oberfläche des offenporigen Halbzeugs und der inneren Oberfläche der Hohlräume der Stege (bei Verwendung eines Metallschaumes), mit dem Metall oder der Legierung, aus dem das offenporige Halbzeug gebildet ist, unter Bildung aluminiumreicher intermetallischer Phasen und Mischkristalle reagiert. Sowohl bei Sinterung unter Verwendung sinteraktiver Partikel, als auch beim Schmelzen erfolgt die Bildung einer gradierten Legierung ausschließlich an der Oberfläche des beschichteten offenporigen Metallwerkstoffs unter Erhalt der darunterliegenden duktilen, metallischen Kernschicht. Die Gradierung beinhaltet verschiedene Phasen, die sich abhängig vom Phasenzustandsdiagramm der verwendeten Elemente und der zur Verfügung stehenden Diffusionszeit ausbilden. Die Schichtdicke der resultierenden Legierungsphasengradienten aufweisenden gradierten Schicht kann 0,5 µm - 100 µm, besonders vorteilhaft 5 µm - 50 µm betragen. Die Dicke der darunterliegenden Kernschicht, die ausschließlich die Zusammensetzung des zugrundeliegenden Halbzeugs oder einer einphasigen Mischkristalllegierung aufweist, kann zwischen 1 µm und 1000 µm liegen. Die Schichtdicken der äußeren Legierungsphasen und der inneren Kernschicht sowie des Verhältnisses zueinander können mit der Wahl von entsprechend dicken Stegen des offenporigen Ausgangsmaterials, der Beladung mit Aluminium- bzw. aluminiumhaltigen Partikeln sowie der Temperaturführung während eines Sinterprozesses beeinflusst werden.

In einem abschließenden Oxidationsschritt bei einer zweiten Wärmebehandlung bilden Aluminium oder ein- und/oder mehrphasige Legierungen aus Aluminium und mindestens einem weiteren Metall M an der Oberfläche des gesinterten oder über den Schmelzpunkt von Aluminium erwärmten, beschichteten offenporigen Halbzeugs chemisch definierte, strukturierte Oxide die aus reinem Aluminiumoxid bestehen oder zumindest einen hohen Anteil > 50 % an Aluminiumoxid aufweisen und in Abhängigkeit von Dauer und Temperatur der Behandlung verschiedene Polymorphe von Aluminiumoxid enthalten. Dabei bildet das Oxid eine geschlossene oder nahezu geschlossene Oberflächenschicht. Eine nahezu geschlossene Oxidschicht C sollte mindestens 90 % der Oberfläche bedecken. Die oxidative zweite Wärmebehandlung sollte bei Temperaturen im Bereich von mindestens 1200°C, unter oxidierender Atmosphäre, die aus Luft, Sauerstoff und/oder Gemischen mit Inertgasen gebildet sein und unter Normaldruck oder reduziertem Druck durchgeführt werden. Erfolgt die oxidative Wärmebehandlung bei niedrigen Temperaturen im Bereich von 450 °C bis 500 °C erfolgt eine Zunahme der Dicke der amorphen Aluminiumoxidschicht. Im Temperaturbereich von 630 °C - 870 °C bildet sich eine nahezu geschlossene oder geschlossene, kristalline γ-Al₂O₃ Schicht an der Oberfläche des Halbzeugs. Ab einer Oxidationstemperatur von ≥ 920 °C bildet sich eine gemischte Oxidschicht C bestehend aus den Polymorphen γ-Al₂O₃, θ-Al₂O₃ und α-Al₂O₃. Der Anteil der γ-Al₂O₃ Phase kann durch Erhöhung von Dauer und Temperatur der Behandlung zugunsten der θ-Al₂O₃ und α-Al₂O₃ Phasen reduziert werden. Ab einer Oxidationstemperatur von 1020 °C sind in der Oxidschicht ausschließlich θ-Al₂O₃ und α-Al₂O₃ Phasen nachweisbar (XRD). Eine pulverdiffraktometrisch reine α-Al₂O₃ Oxidschicht, welche die höchste Dichte aller Polymorphe von Aluminiumoxid (ρ_{α}= 3990 kg/m³) aufweist, wird erfindungsgemäß durch Oxidation bei ≥ 1200 °C erreicht.

Der nach diesem Verfahren hergestellte, offenporige Körper kann als strukturiertes Trägermaterial für eine funktionale Beschichtung eingesetzt werden. Die Beschichtung kann durch Tauchen, Sprühen, Nassimprägnieren, Trockenimprägnieren bzw. Kapillarimprägnierung, Fällung, Cofällung, elektrochemische Abscheidung, Gasphasenabscheidung und/oder Immobilisierung metallorganischer Komplexe erfolgen, wobei das Beschichten des strukturierten Trägermaterials mit einer funktionalen Beschichtung auch einen Trockenschritt, einen Reduktionsschritt und/oder das abschließende Kalzinieren des Materials umfassen kann. Besonders vorteilhaft ist das Kalzinieren bei Temperaturen unterhalb der gewählten Oxidationstemperatur, um ein ungewünschtes Fortschreiten der Oxidation zu vermeiden. Als aktive Komponenten der funktionalen Beschichtung kann man beispielsweise Edelmetalle wie Pt, Pd, Rh, Ru, Au, Os, Ir, Ag und weitere Übergangsmetalle wie Cr, Mn, Fe, Co, Ni, Mo, Re, V, Cu, W sowie deren Oxide oder metallorganische Komplexe einsetzen.

Des Weiteren bilden ein- und/oder mehrphasige Legierungen aus Aluminium und mindestens einem der Metalle M = Ni, Co, Fe, Cu und/oder Ag sowie reine Aluminiumschichten im Rahmen einer oxidativen Temperaturbehandlung unter ausgewählten Bedingungen chemisch definierte, strukturierte Oxidschichten verschiedener Aluminiumoxidpolymorphe. Sauerstoffpartialdruck, Dauer und Temperatur der oxidativen Behandlung bestimmen die Zusammensetzung und Eigenschaften der finalen Oxidschicht. Im Temperaturbereich von 300 °C - 500 °C mit Luft als Oxidationsmittel kann ein Wachstum der Schichtdicke der natürlichen, amorphen Aluminiumoxidschicht beobachtet werden, die eine Dicke von 9 nm erreichen kann und eine Dichte von ρₐₘ = 3050 kg/m³ aufweist. Wird die oxidative Behandlung bei mindestens 630 °C - 870 °C durchgeführt, bildet sich eine mindestens nahezu geschlossene, kristalline γ-Al₂O₃ Oberflächenschicht mit einer Dichte von ρ_{γ}= 3660 kg/m³. Bei einer Oxidationstemperatur von 920 °C bildet sich eine gemischte Oxidschicht C bestehend aus den Polymorphen γ-Al₂O₃, θ-Al₂O₃ und α-Al₂O₃. Mit zunehmender Dauer und Temperatur der Oxidation nimmt der Anteil der γ-Al₂O₃ Phase zugunsten der θ-Al₂O₃ und α-Al₂O₃ Phasen ab. Bei einer Oxidationstemperatur von 1020 °C sind in der Oxidschicht C ausschließlich θ-Al₂O₃ und α-Al₂O₃ Phasen nachweisbar (XRD). Eine pulverdiffraktometrisch reine α-Al₂O₃ Oxidschicht mit einer Dicke von ≥ 500 nm und einer Dichte von ρ_{α}= 3990 kg/m³ kann durch Oxidation bei ≥ 1200 °C erhalten werden. Als Beschichtung erhöht Aluminiumoxid die Temperaturbeständigkeit, Oxidations- und Korrosionsbeständigkeit sowie Lebensdauer katalytisch aktiver Materialien und Katalysatorträger durch die Wirkung als Diffusionsbarriere für Sauerstoff und reaktive Substanzen. Weiterhin kann die Bildung einer geschlossenen Aluminiumoxidschicht als Diffusionsbarriere auf einem offenporigen Nickelträger die Vergiftung für die Katalyse verwendeter, funktionaler Beschichtungen durch Diffusion von Nickelkationen in die katalytisch aktive Schicht be- oder gar vollständig verhindern. Vorteilhaft ist in diesem Zusammenhang die Bildung von Aluminiumoxidphasen hoher Dichten, besonders vorteilhaft die Bildung von α-Al₂O₃, welches die höchste Dichte aller Polymorphe aufweist. Ferner ermöglicht die Bildung aluminiumreicher Oberflächenoxide eine Erhöhung der mechanischen Stabilität und Druckfestigkeit offenporiger Trägermaterialien, die aus duktilen Metallen oder Legierungen bestehen und unter dem Druck des Gewichtes darüber angeordneter Formkörper in einem Reaktor plastisch verformt werden können. Beispielsweise kann die Druckfestigkeit nach DIN 50134 / ISO 13314 eines offenporigen Kobaltschaumes durch Beschichtung mit Aluminium und Bildung von Kobalt- und Aluminiummischoxiden an der Oberfläche des Materials auf 5 MPa mehr als verdreifacht werden. Die Verwendung offenporiger Ausgangssubstrate bietet die Möglichkeit strukturierte Trägermaterialien mit vorteilhaften Strömungseigenschaften, hohen spezifischen Oberflächen und folglich hohen katalytischen Aktivitäten bereitzustellen.

Eine große Herausforderung der Beschichtung offenporiger Materialien mit reinen bzw. aluminiumreichen Oxidschichten liegt in der Auswahl geeigneter Substrate mit ausreichender Flächendichte, Pulver mit optimaler Partikelgrößenverteilung sowie einer geeigneten Temperaturbehandlung bei der Herstellung eines offenporigen Metallschaumes. Dabei sollte die Temperaturführung so gewählt sein, dass lediglich an der Oberfläche eine Reaktion erfolgt, da eine komplette Reaktion bis in den Grundwerkstoff einer Kernschicht hinein eine Versprödung aufgrund der Bildung intermetallischer Phasen hervorrufen würde. Zudem ist die Bildung intermetallischer Phasen insbesondere bei NiAl stark exotherm, so dass die Haltezeit bei maximaler Temperatur kurzgehalten werden sollte, damit die poröse Struktur durch die Bildung einer zu hohen Menge flüssiger Phase nicht zerstört wird. Zielführend ist deshalb die Reaktion durch die Temperaturführung so zu steuern, dass ein Gradient mit aluminiumreichen Phasen an der Oberfläche und absinkenden Aluminiumgehalt hin zur Kernschicht, also des Grundwerkstoffs eines Halbzeugs gebildet wird und somit die Kernschicht duktil bleibt. Dies ist insbesondere unter Verwendung sinteraktiver Aluminiumlegierungen, die z.B. Mg und/oder Si enthalten, gewährleistet, wobei die Wärmebehandlungstemperatur unterhalb des Aluminiumschmelzpunktes von 660 °C gehalten werden sollte. Eine beispielhafte Legierung dafür ist die EA 321 von Ecka Granules. Vorteilhaft ist dabei, dass aufgrund des hohen Aluminiumgehaltes an der Oberfläche die Ausbildung einer geschlossenen α-Aluminiumoxidschicht befördert und die Bildung von Oxiden aus dem Grundwerkstoff auf Grund der unterschiedlichen Diffusionswege zur Oberfläche unterdrückt werden kann.

Nachfolgend soll die Erfindung beispielhaft erläutert werden.

Dabei zeigt:

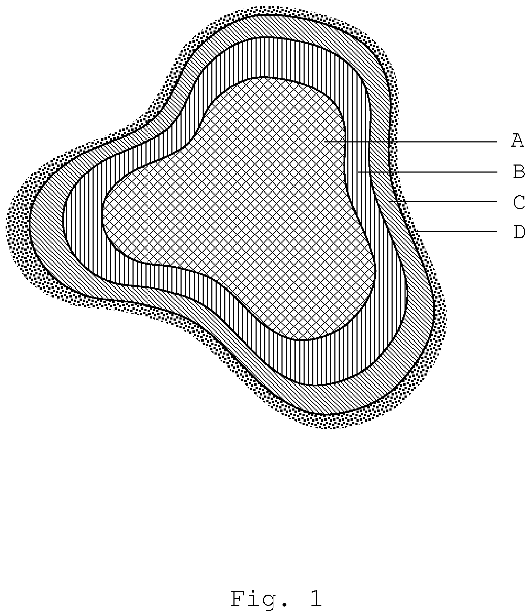

Figur 1 eine Schnittdarstellung durch ein Beispiel eines erfindungsgemäßen offenporigen Metallkörpers.

Dabei ist eine Kernschicht A, welche sowohl aus Vollmaterial als auch aus Stegen, welche innen hohl sind, gebildet sein kann, die mit einem der Metalle Ni, Co, Fe, Cu, Ag oder einer Legierung davon gebildet ist, mit einer gradierten Schicht B ausgebildet. Auf der gradierten Schicht B ist die Oxidschicht C ausgebildet. Dieser Aufbau kann ein Trägermaterial A-C bilden, wobei auf der Oxidschicht C eine funktionale Beschichtung D ausgebildet werden kann.

Es kann eine zumindest nahezu geschlossene Oxidschicht C gebildet werden, welche als kontrollierbare Diffusionsbarriere und/oder als thermischer sowie elektrischer Isolator zwischen einer darüber aufgebrachten aktiven, funktionalen Beschichtung D und einer darunterliegenden gradierten Schicht B sowie einer metallischen Kernschicht A des Halbzeugs fungieren, welche die Oxidations- und Korrosionsbeständigkeit des strukturierten Trägermaterials unter chemischer und thermischer Belastung gewährleisten, die mechanische Stabilität des offenporigen, strukturierten Trägermaterials erhöhen und eine dauerhafte, starke Anhaftung einer aktiven, funktionalen Beschichtung ermöglichen kann.

Einige Metalle, darunter Ni, Co, Fe, Cu, und Ag bilden zusammen mit Aluminium intermetallische Phasen, die infolge einer oxidativen Behandlung in reines Aluminiumoxid oder gemischtmetallische Oxide mit einem hohen Anteil an Aluminiumoxid überführt werden können, welche als Beschichtung duktiler Metalle deren elastische Verformbarkeit senken, die mechanische Stabilität erhöhen, die Anhaftung einer funktionalen Beschichtung D verbessern und als Diffusionsbarriere die unerwünschte Migration von Elementen aus der metallischen Kernschicht sowie der gradierten Schicht in eine darauf ausgebildete funktionale Beschichtung kontrollierbar be- oder verhindern und die Lebensdauer einer metallischen Kernschicht A, eines strukturierten Trägermaterials sowie einer funktionalen Beschichtung D drastisch verbessern kann. Insbesondere im Bereich elektrochemischer Applikationen, wie beispielsweise der Herstellung von Batterien und Elektroden sind die Dauerhaftigkeit einer hohen elektrischen Leitfähigkeit aber auch Wärmeleitfähigkeit des metallischen Kernschicht A sowie der gradierten Schicht B von Vorteil. Die Oxidschicht C kann in diesem Fall als Isolator zwischen der Oberfläche der metallischen Kernschicht A gradierter Schicht B und einer funktionalen Beschichtung D fungieren. Des Weiteren passiviert die Oxidschicht C die metallische Kernschicht A sowie die gradierte Schicht B gegenüber korrosiven Medien und verhindert somit die Abnahme der elektrischen sowie thermischen Leitfähigkeiten durch Korrosion und unerwünschte Diffusion von Elementen aus der metallischen Kernschicht A sowie der gradierten Schicht B in eine darauf ausgebildete funktionale Beschichtung D sowie deren Abgabe in ein umgebendes Medium.

Einige der in der chemischen Industrie eingesetzten Katalysatoren verlieren mit zunehmender Standzeit an Aktivität durch verschiedene Effekte, wie physikalischem und chemischem Verschleiß, Dusting und Leaching, d.h. dem Auswaschen aktiver Metalle im Reaktionsmedium, welche in Folge mit den Produkten entfernt werden und nicht mehr für die Katalyse zur Verfügung stehen. Neben einem vollständigen Verhindern der unerwünschten Migration von Elementen aus der metallischen Kernschicht A und der gradierten Schicht B mit Hilfe einer als Diffusionsbarriere fungierenden Oxidschicht C, kann deren Diffusivität für Metallatome und -ionen durch Dicke, Zusammensetzung Kristallstruktur und Dichte der Oxidschicht C beeinflusst werden. Dies kann durch Kontrolle der chemischen Zusammensetzung der Oxidschicht C über die Zusammensetzung der gradierten Phase in der gradierten Schicht B, der Dicke der Oxidschicht C über Dauer, Temperatur und Sauerstoffpartialdruck des Oxidationsvorgangs sowie der Phasenzusammensetzung über die Temperatur des Oxidationsvorgangs erreicht werden. Die metallische Kernschicht A kann mit Metallen gebildet sein, welche die aktive Komponente einer funktionalen Beschichtung D darstellen. In diesem Fall ermöglicht eine gewünschte, kontrollierte Migration von Elementen aus der Kernschicht A und der gradierten Schicht B durch die Oxidschicht C in die funktionale Beschichtung D den Ausgleich der durch physikalische und chemische Verschleißeffekte verlorenen Aktivkomponente und ermöglicht hohe katalytische Aktivität bei längeren Katalysatorstandzeiten.

### Ausführungsbeispiele

### Ausführungsbeispiel 1 - nicht erfindungsgemäß

Als Halbzeug wird ein offenporiger Nickelschaum mit einer Zellgröße der Poren von 580 µm, einer Flächendichte von 1000 g/m² und ca. 94 % Porosität, einer Wandstärke der Stege zwischen Poren von 20 µm, mit einer Probengröße 80 mm x 80 mm, Dicke 1,9 mm ; hergestellt durch elektrolytisches Abscheiden von Ni auf PU-Schaum und Ausbrennen der organischen Bestandteile eingesetzt.

Für die Beschichtung der Halbzeugoberfläche wird reines Al-Metallpulver mit einer mittleren Partikelgröße < 63 µm und mit einer Masse von 20 g eingesetzt.

Als Binder für das AI-Metallpulver wird eine 1 %-ige wässrige Lösung aus Polyvinylpyrrolidon mit einem Volumen 15 ml hergestellt.

Der das Halbzeug bildende Nickelschaum wird beidseitig mit dieser Binderlösung besprüht. Anschließend wird der Schaum in einer Vibrationseinrichtung fixiert und beidseitig mit dem Al-Metallpulver bestreut. Durch die Vibration wird dieses Pulver gleichmäßig in dem porösen Netzwerk des Schaums verteilt. Die Prozedur wird viermal wiederholt.

Entbinderung und Sinterung des Al-Metallpulvers werden bei einer ersten Wärmebehandlung in einer Stickstoffatmosphäre durchgeführt. Dazu wird ein Rohrofen auf 660 °C aufgeheizt. Das beschichtete Halbzeug wird von einer 200 °C warmen Zone in eine 660 °C heiße Zone für 2s und danach wieder in die kühlere 200 °C warme Zone verbracht.

Während der Wärmebehandlung schmilzt das Aluminiumpulver überwiegend auf und reagiert mit den oberflächennahen Zonen der Nickelschaumstege. Dabei entsteht dort ein Gradient aus aluminiumreichen und aluminiumarmen Mischkristallen, Phasen mit eutektischer Zusammensetzung sowie intermetallischen Phasen des Stoffsystems Ni-Al mit einem Konzentrationsgefälle zwischen der aluminiumreichen Oberfläche und dem Kernoberflächenbereich, der aus reinem Nickel des Halbzeugwerkstoffs gebildet ist. An der Oberfläche verbleibt die aluminiumreiche Phase NiAl₃ mit teilweise zusätzlich entweder reinen (100 Ma.-% Al) oder eutektisch (~94 Ma.-% AI) zusammengesetzten Aluminiumbereichen. Der Aluminiumanteil nimmt von der Oberfläche in Richtung des Inneren der Kernschicht A,_insbesondere der Stege eines Metallschaums ab. Die Schichtdicke der gradierten Schicht B mit resultierendem Legierungsphasengradienten beträgt 15 µm. Im Inneren der Stege verbleibt eine reine Ni-Schicht, die die Kernschicht A bildet, mit einer Schichtdicke von 10 µm.

Im Folgeschritt wird die aluminiumreiche Oberfläche genutzt, um durch Oxidation eine reine Aluminiumoxiddeckschicht C auf der Stegoberfläche zu erzeugen, welche aufgrund ihrer passivierenden Eigenschaften die thermische und chemische Stabilität erhöht, die Diffusion von Nickelionen an die Oberfläche vermindert und zudem die mechanische Belastbarkeit des metallischen Halbzeugwerkstoffs, der die Kernschicht A bildet, verbessert. Sauerstoffpartialdruck, Dauer und Temperatur der Oxidation werden so gewählt, dass eine Migration von Aluminiumatomen in Richtung der Kernschicht A sowie die ungewollte, vollständige Oxidation bis zur Oberfläche der Kernschicht A, insbesondere der Stege eines Metallschaums verhindert wird, um eine Versprödung des Werkstoffs auszuschließen. Die Oxidation erfolgt mit Luft als Oxidationsmittel bei einer Temperatur von 635 °C im vorgeheizten Ofen über einen Zeitraum von 65 min. Während der Oxidation wächst die Dicke der amorphen Aluminiumoxidschicht C zunächst bis zu einer kritischen Dicke von 5 nm an. Nach Erreichen der kritischen Dicke, der Aluminiumoxidschicht C bilden sich aus der amorphen Aluminiumoxidphase kubische γ-Al₂O₃ Kristallite, die eine höhere Dichte aufweisen und die Oberfläche zunächst nur zum Teil bedecken. Nach einer 65 minütigen oxidativen Behandlung bildet sich eine geschlossene γ-Al₂O₃ Schicht C an der Oberfläche der Stege, die die Kernschicht A bilden. Anschließend wird das strukturierte Trägermaterial A-C aus dem Ofen entnommen und bei Raumtemperatur abgekühlt. Abschließend erhält man eine 0,5 µm dicke Aluminiumoxidschicht C, die überwiegend γ-Al₂O₃ enthält und eine Dichte von 3660 kg/m³ aufweist.

**Ausführungsbeispiel 2** - nicht erfindungsgemäss Als Halbzeug wird ein offenporiger Kobaltschaum mit einer Zellgröße der Poren von 800 µm, mit einer Flächendichte von 1500 g/m² und ca. 89 % Porosität, einer Wandstärke der Stege, die zwischen Poren angeordnet sind, von 30 µm mit einer Probengröße von 80 mm x 80 mm, Dicke 2,5 mm eingesetzt. Das Halbzeug wird durch elektrolytisches Abscheiden von Co auf PU-Schaum und nachfolgendem Ausbrennen der organischen Bestandteile hergestellt. Dabei bilden die Stege die Kernschicht A.

Für die Beschichtung wurde Al-Metallpulver mit einer mittleren Partikelgröße < 63 µm und einer Masse von 30 g eingesetzt.

Zur Ausbildung der Oberflächenbeschichtung des Halbzeugs wird als Binder eine 1 %-ige wässrige Lösung aus Polyvinylpyrrolidon mit einem Volumen von 20 ml vorbereitet.

Der Kobaltschaum des Halbzeugs wird beidseitig mit der Binderlösung besprüht. Anschließend wird das mit der Binderlösung an Oberflächen beschichtete Halbzeug in einer Vibrationseinrichtung fixiert und beidseitig mit dem Al-Metallpulver bestreut. Durch die Vibration wird das Al-Metallpulver in dem porösen Netzwerk des Halbzeugwerkstoffs homogen verteilt. Die Prozedur wird fünfmal wiederholt.

Die Entbinderung und Sinterung des mit Binderlösung und Al-Metallpulver beschichteten Halbzeugs wird in einer Stickstoffatmosphäre durchgeführt. Dazu wurde ein Rohrofen auf 665°C aufgeheizt. Das beschichtete Halbzeug wird von einer 200 °C warmen Zone in eine 665°C heiße Zone für 5s und danach wieder in die kühlere Zone mit 200 °C verbracht.

Während der ersten Wärmebehandlung schmilzt das Al-Metallpulver überwiegend auf und reagiert mit den oberflächennahen Zonen der Kobaltschaumstege des die Kernschicht A bildenden Halbzeugs. Dabei bildet sich an der Oberfläche eine gradierte Schicht B, die aus aluminiumreichen und aluminiumarmen Mischkristallen, Phasen mit eutektischer Zusammensetzung sowie intermetallischen Phasen des Stoffsystems Co-Al entsprechend des Konzentrationsgefälles besteht, ausgehend von der aluminiumreichen Oberfläche hin zur reinen Kobalt-Kernschicht A des Halbzeugwerkstoffs aus. An der Oberfläche verbleibt die aluminiumreiche Phase Co₂Al₉ mit teilweise zusätzlich entweder reinen (100 Ma.-% Al) oder eutektisch (~99 Ma.-% Al) zusammengesetzten Aluminiumbereichen. Der Aluminiumanteil nimmt von der Oberfläche in Richtung zum Inneren der Stege ab. Die Schichtdicke des Oberflächenbereichs mit der gradierten Schicht B mit resultierendem Legierungsphasengradienten beträgt 20 µm. Im Inneren der Stege verbleibt eine reine Kobalt-Kernschicht A mit einer durchschnittlichen Schichtdicke der Stege zwischen Poren von 20 µm.

Im nachfolgenden Oxidationsschritt wird die aluminiumreiche Oberfläche bei einer zweiten Wärmebehandlung genutzt, um durch Oxidation eine reine Aluminiumoxidschicht C auf der Stegoberfläche auszubilden, welche aufgrund ihrer passivierenden Eigenschaften die thermische und chemische Stabilität erhöht, die Diffusion von Kobaltionen an die Oberfläche verringert und die mechanische Belastbarkeit des metallischen Basismaterials erhöht. Sauerstoffpartialdruck, Dauer und Temperatur der Oxidation werden so gewählt, dass eine Migration von Aluminiumatomen in Richtung der Kobalt-Kernschicht A sowie die ungewollte, vollständige Oxidation bis zur Oberfläche der Kernschicht A verhindert wird, um eine Versprödung des Materials auszuschließen. Die Oxidation erfolgt mit Luft als Oxidationsmittel bei 1050 °C im vorgeheizten Ofen über einen Zeitraum von 15 min. Während der Oxidation wächst die Dicke der amorphen Aluminiumoxidschicht C bis zu einer kritischen Dicke von 5 nm an. Nach Erreichen der kritischen Dicke bilden sich aus der amorphen Aluminiumoxidphase kubische γ-Al₂O₃ Kristallite, die eine höhere Dichte aufweisen und einen Teil der Stegoberflächen bedecken. Mit zunehmender Dauer der oxidativen Behandlung bildet sich eine geschlossene γ-Al₂O₃ Schicht an der Oberfläche der Stege. Nach 15 min hat sich aus der geschlossenen γ-Al₂O₃-Schicht infolge der Übergänge von γ- zu δ- zu θ- und abschließend zu α- Al₂O₃ eine geschlossene Deckschicht gebildet, welche θ- Al₂O₃ als Neben- und α-Al₂O₃ als Hauptphase enthält. Anschließend wird der Schaum aus dem Ofen entnommen und bei Raumtemperatur abgekühlt. Abschließend erhält man eine 0,5 µm - 1 µm dicke Aluminiumoxidschicht C, die neben einem geringen Anteil an θ-Al₂O₃ überwiegend α-Al₂O₃ enthält, eine hohe Dichte von bis zu 3990 kg/m³ aufweist und mit 5 MPa mehr als das Dreifache der Druckfestigkeit eines reinen Kobaltschaumes (1,5 MPa) besitzt.

### Ausführungsbeispiel 3 - nicht erfindungsgemäss

Als Halbzeug wird ein offenporiger Silberschaum mit einer Zellgröße der Poren von 450 µm, mit einer Flächendichte von 2000 g/m² und ca. 88 % Porosität, einer Wandstärke der Stege mit denen die Kernschicht A gebildet ist und die zwischen Poren angeordnet sind, von 50 µm mit einer Probengröße von 75 mm x 65 mm, Dicke 1,7 mm eingesetzt. Das Halbzeug wird durch elektrolytisches Abscheiden von Ag auf PU-Schaum und nachfolgendem Ausbrennen der organischen Bestandteile hergestellt.

Für die Beschichtung wurde ein vorlegiertes AgAl-Metallpulver, bestehend aus 27 Gew.-% Al und 73 Gew.-% Ag, mit einer mittleren Partikelgröße < 75 µm und einer Masse von 60 g eingesetzt.

Zur Ausbildung der Oberflächenbeschichtung des Halbzeugs wird als Binder eine 1 %-ige wässrige Lösung aus Polyvinylpyrrolidon mit einem Volumen von 30 ml vorbereitet.

Der Silberschaum des Halbzeugs wird beidseitig mit der Binderlösung besprüht. Anschließend wird das mit der Binderlösung an Oberflächen beschichtete Halbzeug in einer Vibrationseinrichtung fixiert und beidseitig mit dem vorlegierten AgAl-Metallpulver bestreut. Durch die Vibration wird das vorlegierte AgAl-Metallpulver in dem porösen Netzwerk des Halbzeugwerkstoffs homogen verteilt. Die Prozedur wird achtmal wiederholt.

Die Entbinderung und Sinterung des mit Binderlösung und vorlegiertem AgAl-Metallpulver beschichteten Halbzeugs wird in einer Stickstoffatmosphäre durchgeführt. Dazu wurde ein Rohrofen auf 590°C aufgeheizt. Das beschichtete Halbzeug wird von einer 200 °C warmen Zone in eine 590°C heiße Zone für 10s und danach wieder in die kühlere Zone mit 200 °C verbracht.

Während der ersten Wärmebehandlung schmilzt das vorlegierte AgAl-Metallpulver überwiegend auf und reagiert mit den oberflächennahen Zonen der Silberschaumstege des die Kernschicht A bildenden Halbzeugs. Dabei bildet sich an der Oberfläche eine gradierte Schicht B, die aus aluminiumreichen und aluminiumarmen Mischkristallen sowie intermetallischen Phasen des Stoffsystems Ag-Al entsprechend des Konzentrationsgefälles besteht, ausgehend von der aluminiumreichen Oberfläche hin zur reinen Silber-Kernschicht A des Halbzeugwerkstoffs aus. An der Oberfläche verbleibt die aluminiumreiche Phase Ag₂Al. Reine (100 Ma.-% Al) Aluminiumbereiche konnten aufgrund der Vorlegierung so gut wie keine beobachtet werden. Der Aluminiumanteil nimmt von der Oberfläche in Richtung zum Inneren der Stege ab. Die Schichtdicke des Oberflächenbereichs mit der gradierten Schicht B mit resultierendem Legierungsphasengradienten beträgt 25 µm. Im Inneren der Stege verbleibt eine reine Silber-Kernschicht A mit einer durchschnittlichen Schichtdicke der Stege zwischen Poren von 25 µm.

Im nachfolgenden Oxidationsschritt wird die aluminiumreiche Oberfläche bei einer zweiten Wärmebehandlung genutzt, um durch Oxidation eine reine Aluminiumoxiddeckschicht auf der Stegoberfläche auszubilden, welche aufgrund ihrer passivierenden Eigenschaften die thermische und chemische Stabilität erhöht, die Diffusion von Silberionen an die Oberfläche verringert und die mechanische Belastbarkeit des metallischen Basismaterials erhöht. Sauerstoffpartialdruck, Dauer und Temperatur der Oxidation werden so gewählt, dass eine Migration von Aluminiumatomen in Richtung der Silberkernschicht A sowie die ungewollte, vollständige Oxidation bis zur Oberfläche der Kernschicht A, also bis zur Oberfläche der Stege verhindert wird, um eine Versprödung des Materials auszuschließen. Die Oxidation erfolgt mit Luft als Oxidationsmittel bei 900 °C im vorgeheizten Ofen über einen Zeitraum von 10 min. Während der Oxidation wächst die Dicke der amorphen Aluminiumoxidschicht bis zu einer kritischen Dicke von 5 nm an. Nach Erreichen der kritischen Dicke bilden sich aus der amorphen Aluminiumoxidphase kubische γ-Al₂O₃ Kristallite, die eine höhere Dichte aufweisen und einen Teil der Stegoberflächen bedecken. Mit zunehmender Dauer der oxidativen Behandlung bildet sich eine geschlossene γ-Al₂O₃ Schicht an der Oberfläche der Stege. Nach 10 min hat sich aus der geschlossenen γ-Al₂O₃-Schicht infolge der Übergänge von γ- zu δ- zu θ- und abschließend zu α- Al₂O₃ eine geschlossene Deckschicht gebildet, welche sowohl θ- Al₂O₃ als auch α-Al₂O₃ enthält. Anschließend wird der Schaum aus dem Ofen entnommen und bei Raumtemperatur abgekühlt. Abschließend erhält man eine 0,5 µm - 2 µm dicke Aluminiumoxidschicht C, die θ-Al₂O₃ und α-Al₂O₃ enthält, eine hohe Dichte von bis zu 3990 kg/m³ aufweist und mit 4 MPa mehr als das Vierfache der Druckfestigkeit eines reinen Silberschaumes (1 MPa) besitzt.

## Patentansprüche

1. Verfahren zur Herstellung eines offenporigen Metallkörpers bei dem ein die Kernschicht (A) bildendes offenporiges Halbzeug, bestehend aus Ni, Co, Fe, Cu, Ag oder einer Legierung, die mit einem dieser chemischen Elemente gebildet ist, wobei in der Legierung eines dieser chemischen Elemente mit mehr als 40 at% enthalten ist,
an der Oberfläche mit reinem Aluminiumpulver oder einem Pulver einer Aluminiumlegierung, in der Aluminium mit mindestens 40 at% enthalten ist, beschichtet wird und
bei einer ersten Wärmebehandlung eine gradierte Schicht (B) an der Oberfläche des Halbzeugs ausgebildet wird, die mit intermetallischer Phase und/oder Mischkristallen von Al gebildet ist, ausgebildet wird, und
bei einer nachfolgenden zweiten Wärmebehandlung unter oxidierenden Bedingungen mit Al auf der gradierten Schicht eine Aluminiumoxidschicht (C) aus reiner α-Al₂O₃ Phase eine Temperatur von mindestens 1200 °C eingehalten wird.

2. Verfahren nach dem vorhergehenden Anspruch 1, **dadurch gekennzeichnet, dass** ein Pulver einer Aluminiumlegierung, in der neben Aluminium mindestens eines der Metalle, die ausgewählt sind aus Ni, Cu, Co, Mo, Fe, Ag, Mg, Si, Ti und W eingesetzt wird.

3. Verfahren nach einem der vorhergehenden Ansprüche, **dadurch gekennzeichnet, dass** für die Beschichtung der Halbzeugoberfläche reines Aluminiumpulver oder ein Pulver einer Aluminiumlegierung auf die Oberfläche des Halbzeugs gestreut, auf die mit einem Binder beschichtete Oberfläche des Halbzeugs aufgebracht, in Form einer Suspension oder Dispersion aufgebracht wird, wobei aufgestreutes Pulver bevorzugt mit einem Binder, elektrostatisch oder mittels Magnetkraftwirkung auf der Oberfläche fixiert wird.

4. Offenporiger Metallkörper hergestellt mit einem Verfahren nach einem der vorhergehenden Ansprüche, **dadurch gekennzeichnet, dass** er mit einer Kernschicht (A) bestehend aus Ni, Co, Fe, Cu, Ag oder einer Legierung, die mit einem dieser chemischen Elemente gebildet ist, wobei in der Legierung eines dieser chemischen Elemente mit mehr als 25 at% enthalten ist, und
an Oberflächen der Kernschicht (A) eine gradierte Schicht (B), die mit intermetallischer Phase oder Mischkristallen von Al gebildet ist, und auf der gradierten Schicht (B) eine Schicht (C), die mit Aluminiumoxid aus reiner α-Al₂O₃ gebildet ist, ausgebildet ist

5. Metallkörper nach dem vorhergehenden Anspruch, **dadurch gekennzeichnet, dass** die Kernschicht (A) mit einem Metallschaum, einem Gitter, einem Netz, Gewebe, Filz, Gelege oder ein mit einem additiven Herstellungsverfahren hergestellter offenporiger Körper gebildet ist.

6. Metallkörper nach einem der zwei vorhergehenden Ansprüche, **dadurch gekennzeichnet, dass** die gradierte Schicht (B) und/oder die Alumiumoxidschicht (C) die Oberfläche der Kernschicht (A) zu mindestens 90 % bedeckt/bedecken.

7. Metallkörper nach einem der drei vorhergehenden Ansprüche, **dadurch gekennzeichnet, dass** die gradierte Schicht (B) eine Schichtdicke im Bereich 1 µm bis 50 µm und/oder die Aluminiumoxidschicht (C) eine Schichtdicke im Bereich 0,05 µm bis 1 µm aufweist/aufweisen.

8. Metallkörper nach einem der vorhergehenden Ansprüche, **dadurch gekennzeichnet, dass** auf der Aluminiumoxidschicht (C) eine funktionale Beschichtung (D) ausgebildet ist.

## Claims

1. A method for producing an open-pored metal body in which an open-pored semi-finished product forming the core layer (A), consisting of Ni, Co, Fe, Cu, Ag or an alloy formed with one of these chemical elements, wherein in the alloy one of these chemical elements is contained with more than 40 at%,
is coated on the surface with pure aluminium powder or a powder of an aluminium alloy containing at least 40 at% aluminium, and
in a first heat treatment, a graded layer (B) is formed on the surface of the semi-finished product, which layer is formed with intermetallic phase and/or mixed crystals of Al, and
in a subsequent second heat treatment under oxidizing conditions with Al on the graded layer an aluminium oxide layer (C) of pure α-Al₂O₃ phase a temperature of at least 1200 °C is maintained.

2. The method according to the preceding claim 1, **characterised in that** a powder of an aluminium alloy in which, in addition to aluminium, at least one of the metals selected from Ni, Cu, Co, Mo, Fe, Ag, Mg, Si, Ti and W is used.

3. The method according to one of the preceding claims, **characterised in that**, for the coating of the semi-finished product surface, pure aluminium powder or a powder of an aluminium alloy is scattered onto the surface of the semi-finished product, applied to the surface of the semi-finished product coated with a binder, applied in the form of a suspension or dispersion, scattered powder preferably being fixed to the surface with a binder, electrostatically or by means of magnetic force action.

4. An open-pore metal body produced by a method according to any one of the preceding claims, **characterised in that** it is formed having a core layer (A) consisting of Ni, Co, Fe, Cu, Ag or an alloy formed with one of these chemical elements, in which alloy one of these chemical elements is contained with more than 25 at%, and
on surfaces of the core layer (A), a graded layer (B) formed with intermetallic phase or mixed crystals of Al, and on the graded layer (B), a layer (C) formed with aluminium oxide of pure α-Al₂O₃.

5. The metal body according to the preceding claim, **characterised in that** the core layer (A) is formed with a metal foam, a mesh, a net, fabric, felt, scrim or an open-pored body produced by an additive production process.

6. The metal body according to one of the two preceding claims, **characterised in that** the graded layer (B) and/or the aluminium oxide layer (C) covers/cover at least 90% of the surface of the core layer (A).

7. The metal body according to any one of the preceding three claims, **characterised in that** the graded layer (B) has a layer thickness in the range of 1 µm to 50 µm and/or the aluminium oxide layer (C) has a layer thickness in the range of 0.05 µm to 1 µm.

8. The metal body according to any one of the preceding claims, **characterised in that** a functional coating (D) is formed on the aluminium oxide layer (C).

## Revendications

1. Procédé pour fabriquer un corps métallique à pores ouverts selon lequel un demi-produit à pores ouverts formant la couche centrale (A), constitué de Ni, Co, Fe, Cu, Ag ou d'un alliage qui est formé avec un de ces éléments chimiques, dans lequel un de ces éléments chimiques est contenu dans l'alliage avec plus de 40 % at,
est revêtu sur la surface d'une poudre d'aluminium pure ou d'une poudre d'un alliage d'aluminium, dans laquelle l'aluminium est contenu avec au moins 40 % at, et
lors d'un premier traitement thermique une couche graduée (B) est réalisée sur la surface du demi-produit, qui est formée avec une phase intermétallique et/ou des microcristaux de Al, et
lors d'un deuxième traitement thermique subséquent, dans des conditions d'oxydation avec Al sur la couche graduée, une couche d'oxyde d'aluminium (C) composée d'une phase d'α-Al₂O₃ pure est maintenue à une température d'au moins 1 200 °C.

2. Procédé selon la revendication précédente 1, **caractérisé en ce qu'**une poudre d'un alliage d'aluminium, dans laquelle en plus de l'aluminium au moins un des métaux, qui sont sélectionnés parmi Ni, Cu, Co, Mo, Fe, Ag, Mg, Si, Ti et W, est utilisée.

3. Procédé selon l'une quelconque des revendications précédentes, **caractérisé en ce que** pour le revêtement de la surface de demi-produit de la poudre d'aluminium pure ou une poudre d'un alliage d'aluminium est répandue sur la surface du demi-produit, appliquée sur la surface du demi-produit revêtue avec un liant, appliquée sous forme d'une suspension ou dispersion, dans lequel la poudre répandue est fixée sur la surface de manière électrostatique ou au moyen d'une action de force magnétique, de préférence avec un liant.

4. Corps métallique à pores ouverts fabriqué avec un procédé selon l'une quelconque des revendications précédentes, **caractérisé en ce qu'**il est réalisé avec une couche centrale (A) constituée de Ni, Co, Fe, Cu, Ag ou d'un alliage qui est formé avec un de ces éléments chimiques, dans lequel un de ces éléments chimiques est contenu dans l'alliage avec plus de 25 % at, et
une couche graduée (B), qui est formée avec une phase intermétallique ou des cristaux mixtes de Al, est réalisée sur les surfaces de la couche centrale (A), et une couche (C), qui est formée avec de l'oxyde d'aluminium composé de α-Al₂O₃ pur, sur la couche graduée (B).

5. Corps métallique selon la revendication précédente, **caractérisé en ce que** la couche centrale (A) est formée avec une mousse métallique, une grille, un filet, tissu, feutre, non-tissé ou un corps à pores ouverts fabriqué avec un procédé de fabrication additive.

6. Corps métallique selon l'une quelconque des deux revendications précédentes, **caractérisé en ce que** la couche graduée (B) et/ou la couche d'oxyde d'aluminium (C) recouvre/recouvrent la surface de la couche centrale (A) à au moins 90 %.

7. Corps métallique selon l'une quelconque des trois revendications précédentes, **caractérisé en ce que** la couche graduée (B) présente une épaisseur de couche dans la plage de 1 µm à 50 µm et/ou la couche d'oxyde d'aluminium (C) une épaisseur de couche dans la plage de 0,05 µm à 1 µm.

8. Corps métallique selon l'une quelconque des revendications précédentes, **caractérisé en ce qu'**un revêtement fonctionnel (D) est réalisé sur la couche d'oxyde d'aluminium (C).
